# EUROPÄISCHE PATENTSCHRIFT

(11) **EP 3 423 263 B1**
(45) Veröffentlichungstag und Bekanntmachung des Hinweises auf die Patenterteilung: **03.01.2024**
(21) Anmeldenummer: 17707890.4
(22) Anmeldetag: 01.03.2017
(51) Int. Cl.: B29C 70/42, B29C 70/48

(54) **VERFAHREN ZUR HERSTELLUNG EINES FASERVERSTÄRKTEN STRUKTURHOHLBAUTEILS SOWIE STRUKTURHOHLBAUTEIL**
METHOD FOR PRODUCING A FIBRE-REINFORCED STRUCTURAL HOLLOW COMPONENT AND STRUCTURAL HOLLOW COMPONENT
PROCÉDÉ POUR FABRIQUER UNE PIÈCE DE STRUCTURE CREUSE RENFORCÉE PAR DES FIBRES AINSI QUE PIÈCE DE STRUCTURE CREUSE

(30) Priorität: 04.03.2016 DE 102016103979
(43) Veröffentlichungstag der Anmeldung: 09.01.2019
(73) Patentinhaber: KTM Technologies GmbH, 5081 Salzburg/Anif (AT)
(72) Erfinder: AMON, Thassilo, 94469 Deggendorf (DE); LOCHNER, Hans, 83486 Ramsau (DE)
(74) Vertreter: Canzler & Bergmeier Patentanwälte Partnerschaft mbB
(86) Internationale Anmeldenummer: PCT/EP2017/054740
(87) Internationale Veröffentlichungsnummer: WO 2017/148998

(56) Entgegenhaltungen:
- EP-A1- 0 862 978
- WO-A1-2013/126981
- DE-A1-102008 013 759
- DE-A1-102013 226 017
- DE-B3-102011 116 656
- GB-A- 2 146 572
- JP-A- S6 131 218
- US-A- 5 132 069
- US-A- 5 784 926
- US-A1- 2008 145 592

## Beschreibung

Die vorliegende Erfindung betrifft ein Verfahren zur Herstellung eines faserverstärkten Strukturhohlbauteils, bei welchem ein Formkern hergestellt wird, der Formkern sowie Fasern mit einem Matrixmaterial in ein Formwerkzeug eingebracht werden, so dass sich eine erste Fasereinheit mit dem Matrixmaterial zur zumindest teilweisen Ausbildung einer Bauteilwandung zwischen dem Formkern und dem Formwerkzeug befindet, das Matrixmaterial zur Ausbildung des Strukturhohlbauteils infolge einer Temperatur- und/oder Druckänderung ausgehärtet wird und der Formkern nach dem Aushärten zur Ausbildung eines Bauteilhohlraums aus dem Strukturhohlbauteil ausgespült wird.

Faserverstärkte Bauteile weisen Verstärkungsfasern, insbesondere Carbonfasern, Glasfasern und/oder Aramidfasern, auf, die in einer, insbesondere thermoplastischen und/oder duroplastischen, Matrix eingebettet bzw. eingebunden sind. Hierbei verleihen insbesondere die Verstärkungsfasern dem Bauteil die nötige Festigkeit bzw. Steifigkeit. Die Matrix hat hingegen die primäre Wirkung, die Verstärkungsfasern in einer gewünschten Form zu halten. Die Verstärkungsfasern werden somit durch die Matrix ausgerichtet, unterstützt sowie geschützt.

Aus der GB 2 146 572 A ist ein Verfahren zur Herstellung eines faserverstärkten Strukturhohlbauteils bekannt, bei dem zunächst aus Wachs ein Formkern mit Öffnungen hergestellt wird. Der Formkern weist eine Negativform der Innenkontur des Strukturholbauteils auf. Der Formkern wird gegossen oder nachträglich eingeschnitzt. In die Öffnungen werden zur Ausbildung von Verstärkungsstreben Fasern eingebracht, die sich mit anderen Fasern, die eine Außenwandung des Strukturhohlbauteils bilden, verbinden.

Aus der DE 10 2007 026 453 A1 ist ein Hohlbauteil mit einer faserverstärkten Versteifungsstrebe bekannt. Je Versteifungsstrebe werden hierbei zylindersegmentförmige Kerne mit Fasermaterial umwickelt und anschließend mittels einer Positionshilfe zueinander positioniert. Zur Ausbildung einer Außenkontur wird ein Formkern durch Wickeltechnik mit Verstärkungsfasern umgeben. Das beschriebene Verfahren ist äußerst aufwendig und bedarf vieler einzelner Arbeitsschritte zur Ausbildung der Verstärkungsstreben.

Aus der DE 10 2013 226 017 A1 ist eine durch Rapid-Prototyping hergestellte Kernstruktur aus einem thermisch, chemisch oder mechanisch lösbaren Kernmaterial bekannt.

Aufgabe der vorliegenden Erfindung ist es somit, ein Verfahren zur Herstellung für ein faserverstärktes Strukturhohlbauteil bereitzustellen, mittels dem die oben genannten Nachteile gelöst werden können.

Die Aufgabe wird gelöst durch ein Verfahren zur Herstellung eines faserverstärkten Strukturhohlbauteils mit den Merkmalen des unabhängigen Patentanspruchs 1.

Vorgeschlagen wird ein Verfahren zur Herstellung eines faserverstärkten Strukturhohlbauteils, bei welchen ein Formkern hergestellt wird. Der Formkern sowie Fasern werden mit einem Matrixmaterial in ein Formwerkzeug eingebracht. Hierdurch befindet sich eine erste Fasereinheit mit dem Matrixmaterial zwischen dem Formkern und dem Formwerkzeug. Die Fasern können in Form von Kurzschnittfasern, Kurzschnittfäden, Endlosfasern, Bändern, Gewebematten, Gelegen und/oder Prepregs bereitgestellt werden. Der Begriff Prepreg bezeichnet Bänder, Gewebematten oder Gewebegelege, die mit einem Harz vorzugsweise einem duroplastischen Matrixmaterial vorimprägniert und gegebenenfalls vorgehärtet sind. Das Matrixmaterial ist vorzugsweise ein Epoxidharz oder Polyurethanharz, insbesondere ein ein-, zwei- oder dreikomponentiges Harz. Aus der ersten Fasereinheit sowie dem Matrixmaterial wird zumindest teilweise eine Bauteilwandung des Strukturhohlbauteils ausgebildet.

Das zunächst viskos vorliegende duro- und/oder thermoplastische Matrixmaterial wird zur Ausbildung des Strukturhohlbauteils infolge einer Temperatur- und/oder Druckänderung ausgehärtet. Hierfür wird das Formwerkzeug geschlossen und mit Druck bzw. Temperatur beaufschlagt. Der Formkern ist dabei ein löslicher Kern. Des Weiteren expandiert dieser vorzugsweise in Folge der Änderung der Umgebungsbedingungen, so dass wenigstens die erste Fasereinheit gemeinsam mit dem Matrixmaterial gegen das Formwerkzeug gepresst wird. Nach dem Aushärten des Matrixmaterials wird der Formkern zur Ausbildung eines Bauteilhohlraums aus dem Strukturhohlbauteil ausgespült.

Erfindungsgemäß wird in dem Formkern wenigstens ein sich durch den Formkern erstreckender Kanal ausgebildet. Der Kanal wird bei der Formkernherstellung zusammen mit dem Formkern urgeformt. Der Kanal wird hierbei während des Herstellens eines Grundkörpers des Formkerns in diesem ausgebildet. Beim Urformen wird aus einem formlosen Stoff ein Werkstück, vorliegend der Formkern mit seinem Kanal, geschaffen. Ziel dabei ist es einen Stoffzusammenhalt zu schaffen und dadurch eine Erstform eines geometrisch festen Körpers herzustellen. Der Formkern liegt vorzugsweise einteilig vor, so dass das Verfahren möglichst einfach und mit wenigen Arbeitsschritten gestaltet werden kann. In den Kanal wird zumindest eine zweite Fasereinheit eingebracht, welche beispielsweise als Gewebe, Gelege, und/oder derartige Schläuche ausgebildet sein kann. Zusätzlich oder alternativ kann diese zweite Fasereinheit auch als Kurzschnittfasern, -fäden oder Endlosfaden ausgebildet sein. Die zweite Fasereinheit kann eine bereits getränkte aber auch ungetränkte Faser sein. Zusätzlich zur zweiten Fasereinheit wird das Matrixmaterial in den Kanal eingebracht. Alternativ ist jedoch auch denkbar, lediglich das Matrixmaterial in den Kanal zu injizieren, ohne zuvor eine zweite Fasereinheit in den Kanal einzulegen. In diesem Fall wird eine Verstärkungselement, insbesondere die Verstärkungsstrebe, ausschließlich durch das Matrixmaterial ausgebildet.

Die zweite Fasereinheit und/oder das Matrixmaterial werden derart in den Kanal eingebracht, dass nach dem Aushärten des Matrixmaterials und dem Ausspülen des Formkerns das Verstärkungselement, insbesondere die Verstärkungsstrebe, in dem Strukturhohlbauteil ausgebildet ist. Das Verstärkungselement, insbesondere die Verstärkungsstrebe, erstreckt sich durch den Bauteilhohlraum hindurch. Zudem ist das Verstärkungselement im Bereich seiner beiden Enden insbesondere form- und/oder stoffschlüssig mit der Bauteilwandung verbunden. Das Herstellungsverfahren des Strukturhohlbauteils kann somit einfach und zeitsparend realisiert werden. Insbesondere dadurch, dass der Formkern zusammen mit seinem zumindest einen Kanal in einem Verfahrensschritt hergestellt wird, kann das Herstellungsverfahren sehr zeitsparen und somit kostengünstig gestaltet werden. Das Verstärkungselement, insbesondere die Verstärkungsstrebe, stellt durch seine Verbindung mit der Bauteilwandung des Strukturhohlbauteils eine Maßnahme zu Stabilitätswahrung auch unter extremen Bedingungen dar, so dass die Qualität dauerhaft sichergestellt ist. Des Weiteren kann durch das vorliegende Verfahren ein sehr leichtes faserverstärktes Strukturhohlbauteil ausgebildet werden, da der Kern nicht in den Hohlraum des Strukturhohlbauteils verbleibt, sondern wieder entfernt wird.

Der zumindest eine Kanal und/oder ein Zuführkanal - der dafür vorgesehen ist, um schnell ein Lösungsmittel in das Innere des Formkerns zu leiten - wird zusammen mit dem Formkern in einem Rapid-Prototyping-Verfahren, insbesondere einem 3D-Druckverfahren, urgeformt bzw. der Formkern wird zusammen mit seinem zumindest einen Kanal und/oder dem Zuführkanal in einem Rapid-Prototyping-Verfahren urgeformt. Hierdurch können auch sehr komplexe Kanalformen, insbesondere mit zumindest einer, vorzugsweise mit zumindest zwei Hinterschneidungen, oder einer gebogenen Freiformgeometrie, ausgebildet werden. Des Weiteren ist der Formkern zusammen mit seinem Kanal sehr schnell und kostengünstig herstellbar. Auch ist der Herstellungsort des Formkerns nicht ortsgebunden. So können Formkerngeometrien virtuell an Kunden verschickt werden, die diese dann vor Ort an ihrem eigenen 3D-Drucker ausdrücken können.

Vorteilhaft ist es, wenn das Verstärkungselement zumindest eine Verstärkungswand (insbesondere vollflächig geschlossen, so dass vorzugsweise zwei voneinander getrennte Kammern ausgebildet sind), eine Verstärkungsstrebe, ein Fachwerk und/oder eine Verstärkungsstruktur ist. Des Weiteren ist es vorteilhaft, wenn das Verstärkungselement hohl ausgebildet ist. Auch kann das Verstärkungselement zumindest bereichsweise geradlinig und/oder gekrümmt ausgebildet sein. Das Verstärkungselement kann eine X- und/oder eine Y-Form aufweisen.

Zudem stellt es einen Vorteil dar, wenn die erste Fasereinheit um den Formkern gewickelt wird. Die erste Fasereinheit wird dabei vorzugsweise durch eine vorimprägnierte Endlosfaser ausgebildet. Ebenso kann die erste Fasereinheit als Prepreg um den Formkern gelegt werden. Dabei ist es zunächst unerheblich, ob die Fasern bereits mit Matrixmaterial getränkt sind oder nicht. Der umwickelte Formkern wird zur Formgebung in das Formwerkzeug eingebracht. Alternativ ist es denkbar, zunächst den Prepreg zur Ausbildung der ersten Fasereinheit in das Formwerkzeug zu legen und anschließend den Formkern einzubringen. Um die Fasern im auszubildenden Strukturhohlbauteil zu fixieren, ist es alternativ oder ergänzend von Vorteil, wenn das Matrixmaterial nach dem Schließen des Formwerkzeugs in dieses injiziert wird. Hierdurch werden die Fasern der ersten sowie der zweiten Fasereinheit mit Matrixmaterial getränkt, so dass sie nach dessen Aushärten in Position gehalten werden und auftretende Spannungen in der Bauteilwandung sowie der Verstärkungsstrebe übertragen und verteilen können.

Das Matrixmaterial wird vorteilhafterweise von der dem Formwerkzeug zugewandten Seite des Formkerns in den Kanal injiziert. Hierfür weist der Formkern wenigstens eine Kanalöffnung auf, über welche das Matrixmaterial durch die erste Fasereinheit in den Kanal geleitet wird. Weiterhin ist es denkbar, das Matrixmaterial derart mit Druck zu beaufschlagen, dass es direkt durch die erste Fasereinheit gedrückt wird, so dass es in den dafür vorgesehen Kanal dringt. In dem Kanal ist vorzugsweise die zweite Fasereinheit angeordnet, so dass diese mit dem eingepressten Matrixmaterial getränkt wird. Es ist jedoch auch denkbar, dass die Verstärkungsstrebe lediglich durch das Matrixmaterial ausgebildet ist. Zusätzlich oder alternativ wird das Matrixmaterial durch den vorzugsweise mit dem Kanal im Bereich zwischen seinen beiden Kanalöffnungen verbundenen Zuführkanal in den Kanal injiziert. Der Zuführkanal erstreckt sich zumindest von dem Bereich des Formwerkzeugs ausgehend, von welchem das Matrixmaterial injiziert wird, bis zu dem Kanal. Hierdurch kann das Matrixmaterial gezielt zu dem Kanal geleitet werden. Da durch den Zuführkanal die für das Lösungsmittel direkt zugängliche Oberfläche des Formkerns erheblich vergrößert wird, wird dessen Ausspülen erleichtert.

Der Kanal wird vorteilhafterweise vor dem Anordnen der ersten Fasereinheit am Formkern ausgebildet.

Des Weiteren ist es vorteilhaft, wenn der Kanal gerade, geknickt und/oder gebogen ausgebildet ist. Zusätzlich oder alternativ ist es vorteilhaft, wenn der Kanal mit zumindest zwei voneinander in seiner Längserstreckung bzw. Längsrichtung beabstandete Hinterschneidungen ausgebildet wird. Der Kanal kann auch eine Freiformgeometrie aufweisen. Er kann auch aus mehreren gleichen und/oder zueinander unterschiedlichen vorstehenden Abschnitten zusammengesetzt sein. Hierdurch kann die spätere Form der Verstärkungsstrebe individuell an die erforderliche Steifigkeit angepasst werden.

Vorteilhaft ist es, wenn beim Urformen, insbesondere Rapid-Prototyping, zunächst eine erste Längshälfte des Kanals in einem ersten Formkernteil und die andere Längsschnitthälfte in einem zweiten Formkernteil ausgebildet wird. Diese beiden Formkernteile werden anschließend miteinander verbunden, so dass der fertige und nur an seinen beiden Enden offene Kanal ausgebildet wird. Die Form des Kanals bzw. der Verstärkungsstrebe kann somit einfach an unterschiedlichste Bedingungen angepasst werden.

Die Fasern der zweiten Fasereinheit werden mittels einer mechanischen und/oder pneumatischen Einbringvorrichtung in den Kanal eingebracht. Die mechanische Einbringvorrichtung ist dabei beispielsweise eine, insbesondere flexible, Nadel. Die Fasern der zweiten Fasereinheit werden beispielsweise mittels der Nadel in den Formkern eingebracht, so dass sich die Fasern von der ersten Kanalöffnung bis zur zweiten Kanalöffnung hindurch erstrecken. Die erste Kanalöffnung ist dabei eine Fasereintrittsöffnung und die zweite Kanalöffnung eine Faseraustrittsöffnung, wobei dies auch umgekehrt erfolgen kann. Ebenso wäre es auch möglich, die Fasern durch beide Kanalöffnungen in den Kanal zu nähen, so dass die beiden Kanalöffnungen Fasereintrittsöffnungen sowie Faseraustrittsöffnungen sind.

Alternativ oder ergänzend ist es von Vorteil, wenn die Fasern der zweiten Fasereinheit mittels eines Luftstroms in den Kanal eingebracht werden. Die Fasereinbringung würde demnach mit einer pneumatischen Einbringvorrichtung, insbesondere einer Düse, erfolgen. Der Kanal wurde dabei vor dem Einblasen der Fasern zusammen mit dem Kern bzw. bei dessen Herstellung urgeformt, wobei prinzipiell jede erdenkliche Kanalform möglich ist. Die Fasern können durch eine der beiden Kanalöffnungen eingeblasen werden, so dass sie aus der anderen Kanalöffnung wieder austreten und sich somit vollständig durch den Kanal erstrecken. Der Kanal weist hierbei zwischen seinen beiden Endöffnungen keine weiteren Öffnungen auf. Das Einblasen der Fasern ermöglicht es, den Kanal auf vielfältige Art und Weise auszubilden, da die Einbringung der Fasern unabhängig von dessen Form erfolgen kann. Um die Fasern auch durch einen stark gebogenen Kanal zu führen, ist es beispielsweise ausreichend die Strömungsgeschwindigkeit des Luftstroms zu erhöhen.

Die beiden Kanalöffnungen können dabei lediglich an dem Formkern selbst ausgebildet werden. Ebenso ist es auch denkbar, dass die erste Fasereinheit die beiden Kanalöffnungen aufweist. Die Platzierung der Kanalöffnungen kann je nach Herstellungsverfahren und Zeitpunkt der Umwicklung des Formkerns mit der ersten Fasereinheit variieren. Wird beispielsweise eine Fasermatte in das Formwerkzeug gelegt, so ist es sinnvoll den Kanal sowie die zweite Fasereinheit vor dem Einlegen in das Formwerkzeug auszubilden. Folglich würde auch nur der Formkern die Kanalöffnungen aufweisen, nicht jedoch die erste Fasereinheit. Wird hingegen zuerst die erste Fasereinheit um den Formkern gelegt und anschließend die zweite Fasereinheit in den Kanal eingebracht, so weist auch die erste Fasereinheit wenigstens eine der beiden Kanalöffnungen auf, da die erste Fasereinheit von der zweiten Fasereinheit durchdrungen werden muss.

Die zweite Fasereinheit ist mit dem jeweils zugeordneten Bereich der ersten Fasereinheit, insbesondere stoff- und/oder formschlüssig, verbunden. Hierbei wird die zweite Fasereinheit an ihren beiden Enden mit der ersten Fasereinheit unter Ausbildung zweier Verbindungsbereiche verbunden. Die Fasern der zweiten Fasereinheit werden dabei mit der ersten Fasereinheit gefügt, insbesondere vernäht. Die beiden Fasereinheiten können hierdurch fest miteinander verbunden werden, so dass eine besonders hohe Stabilität gewährleistet ist. Zudem können die auftretenden Kräfte an der Verbindungsstelle ohne Einbußen wirksam übertragen werden.

Wenigstens einer der beiden Verbindungsbereiche wird an einer Außenseite der ersten Fasereinheit ausgebildet. Hierbei wird vorzugsweise in die erste Fasereinheit ein Schlitz oder eine Öffnung geschnitten. Die zweite Fasereinheit wird anschließend durch diese Öffnung geführt. Die zweite Fasereinheit kann sowohl mit der pneumatischen als auch der mechanischen Einbringvorrichtung eingebracht werden. In einer Ausführungsform wird die zweite Fasereinheit mit der mechanischen Einbringvorrichtung, insbesondere der Nadel, durch die um den Formkern liegende erste Fasereinheit gestochen, insbesondere wenn in der ersten Fasereinheit kein Schlitz oder keine Öffnung eingeschnitten ist. Alternativ können die Fasern der zweiten Fasereinheit mittels des Luftstroms bzw. der Düse eingebracht werden, insbesondere wenn sich der Kanal von der Außenseite der ersten Fasereinheit ausgehend durch den Formkern hindurch bis zur gegenüberliegenden anderen Außenseite der ersten Fasereinheit erstreckt.

Vorteilhaft ist es, wenn im Bereich beider Kanalöffnungen das jeweils überstehende Ende der zweiten Fasereinheit auf die Außenseite der ersten Fasereinheit geklappt wird. Um die zweite Fasereinheit dauerhaft mit der Außenseite der ersten Fasereinheit zu verbinden, ist möglicherweise bereits das injizierte und ausgehärtete Matrixmaterial ausreichend. Zusätzlich ist es ebenso denkbar, die überstehenden Enden mit der Außenseite der ersten Fasereinheit zu vernähen oder zu verflächten. Hierdurch können die Lasten wirksam in das Bauteil geleitet werden, so dass dessen Stabilität positiv beeinflusst wird.

Wenigstens einer der beiden Verbindungsbereiche wird vorteilhafterweise an einer Innenseite der ersten Fasereinheit ausgebildet. Hierfür wird zunächst die zweite Fasereinheit in den Kanal eingebracht, deren überstehende Enden sodann auf einen Umfang des Formkerns geklappt werden. Der Formkern wird anschließend mit der ersten Fasereinheit umwickelt. Um sichere Verbindungsstellen auszubilden, können diese beiden Fasereinheiten zusätzlich miteinander vernäht werden.

Von Vorteil ist es zudem, wenn wenigstens einer der beiden Verbindungsbereiche im Inneren der ersten Fasereinheit ausgebildet wird. Dabei wird vorzugsweise, insbesondere mehrmals hintereinander, eine Faserschicht der ersten Fasereinheit um den Formkern angeordnet. Zur Ausbildung der Faserschicht kann die erste Fasereinheit mehrmals um den Formkern gewickelt werden oder auch in Form einer Fasermatte um den Formkern gelegt werden. Währenddessen oder im Anschluss wird die Faserschicht mit einem Teil der Fasern der zweiten Fasereinheit durchdrungen, insbesondere durchstochen oder, wenn ein Schlitz oder eine Öffnung ausgebildet wurde, durchsteckt. Das überstehende Ende dieses Teils wird auf die Außenseite der ersten Faserschicht geklappt und/oder mit dieser vernäht. Anschließend wird eine weitere zweite Faserschicht um den bestehenden Formkern mit der ersten Faserschicht gelegt oder gewickelt, so dass die Enden der zweiten Fasereinheit bedeckt sind. Das Herstellungsverfahren kann hierdurch einfach gestaltet werden, ohne die Stabilität der Verbindungsbereiche zwischen den Fasereinheiten negativ zu beeinflussen.

Einen weiteren Vorteil stellt es dar, wenn der Zuführkanal des Formkerns vor dem Injizieren des Matrixmaterials mit einem Füllmaterial, insbesondere mit einem Expansionsmaterial wie beispielsweise Wachs gefüllt wird. Das Matrixmaterial wird bei dessen Injektion in das Formwerkzeug durch die erste Fasereinheit hindurch in den Kanal des Formkerns gepresst, so dass auch die zweite Fasereinheit mit dem Matrixmaterial getränkt ist. Durch den mit Füllmaterial gefüllten Zuführkanal ist sichergestellt, dass lediglich der Kanal mit dem Matrixmaterial angereichert wird. Der Zuführkanal, welcher letztlich einem verbesserten Ausspülen des Formkerns dient, wird somit freigehalten. Das Füllmaterial wird nach dem Aushärten des Matrixmaterials zusammen mit dem Formkern ausgespült, so dass der Formkern ideal mittels des Lösungsmittels von dem Strukturhohlbauteil entfernt werden kann.

Der Formkern expandiert vorteilhafterweise bei Temperaturerhöhung. Hierdurch vergrößert sich ein Formkernquerschnitt, so dass die in dem Matrixmaterial eingebettete erste Fasereinheit nach außen gegen eine Negativform des Formwerkzeugs gepresst wird. Sämtliche in den Fasereinheiten sowie dem Matrixmaterial befindliche Luftbläschen können hierdurch effizient aus dem Bauteil entfernt werden, so dass dessen Qualität sichergestellt ist.

Weiterhin ist es von Vorteil, wenn nach dem Aushärten des Matrixmaterials das Lösungsmittel in den Zuführkanal des Formkerns gespült wird, so dass sich der Formkern aus dem Strukturhohlbauteil löst. Alternativ oder zusätzlich ist es von Vorteil, wenn das Lösungsmittel auf einen Querschnitt des Formkerns gespült wird. Der Formkern, welcher beispielsweise ein Sandkern oder ein Salzkern ist, kann insbesondere durch den Zuführkanal zuverlässig und nahezu rückstandsfrei aus dem Strukturhohlbauteil gespült werden.

Der Formkern ist nach dem Aushärten des Strukturhohlbauteils zur Ausbildung eines Bauteilhohlraums aus dem Strukturhohlbauteil ausspülbar. In dem Formkern ist wenigstens ein sich durch diesen erstreckender Kanal ausgebildet, der während der Formkernherstellung zusammen mit dem Formkern in einem Rapid-Prototyping-Verfahren urgeformt ist.

Vorteilhaft ist es, wenn das Strukturhohlbauteil aus einem Faserverbundwerkstoff mit einer Bauteilwandung hergestellt wird. Im Inneren der Bauteilwandung ist ein Bauteilhohlraum ausgebildet. Durch diesen Bauteilhohlraum erstreckt sich wenigstens ein Verstärkungselement, insbesondere eine Verstärkungsstrebe. Das Strukturhohlbauteil ist gemäß der vorangegangenen Beschreibung hergestellt. Das Strukturhohlbauteil ist äußerst stabil ausgebildet, da sich das Verstärkungselement, insbesondere die Verstärkungsstrebe, über den gesamten Bauteilhohlraum erstreckt und somit eine stützende Wirkung hat. Zudem können die im Bauteil auftretenden Lasten effizient geleitet werden, so dass das Bauteil auch hohen Beanspruchungen zuverlässig Stand gehalten wird.

Weiterhin ist es von Vorteil, wenn das Verstärkungselement, insbesondere die Verstärkungsstrebe, an seinen Enden in dem jeweiligen Verbindungsbereich stoff- und/oder formschlüssig mit der Bauteilwandung verbunden, insbesondere vernäht, ist. Einem Ausreißen der Verstärkungsstrebe aufgrund zu hoher Lasten ist hierdurch auf konstruktiv einfache Weise vorgebeugt.

Weitere Vorteile der Erfindung sind in den nachfolgenden Ausführungsbeispielen beschrieben. Es zeigt:
- **Figur 1**: eine Vorderansicht eines Formkerns,
- **Figur 2**: eine Vorderansicht eines zweiten Ausführungsbeispiels eines Formkerns mit einem Kanal,
- **Figur 3a**: eine Schnitteinsicht einer Längsschnitthälfte eines dritten Ausführungsbeispiels eines Formkerns mit einem Kanal,
- **Figur 3b**: eine Schnittansicht einer zweiten Längsschnitthälfte des dritten Ausführungsbeispiels,
- **Figur 3c**: eine Vorderansicht eines Formkerns gemäß dem dritten Ausführungsbeispiels,
- **Figur 4**: eine Schnittansicht eines mit Fasern umwickelten Formkerns,
- **Figur 5**: eine schematische Schnittansicht eines Formwerkzeuges mit einem Formkern,
- **Figur 6**: eine schematische Schnittansicht eines zweiten Ausführungsbeispiels eines Formwerkzeugs mit einem Formkern,
- **Figur 7**: eine Schnittansicht eines weiteren Ausführungsbeispiels eines Formwerkzeugs mit einem Formkern,
- **Figur 8**: eine Schnittansicht eines Strukturbauteils mit Formkern,
- **Figur 9a**: eine Schnittansicht eines Strukturbauteil mit einem Verstärkungselement, insbesondere einer Verstärkungsstrebe, und
- **Figur 9b**: eine Schnittansicht eines Strukturbauteils gemäß Fig. 9a

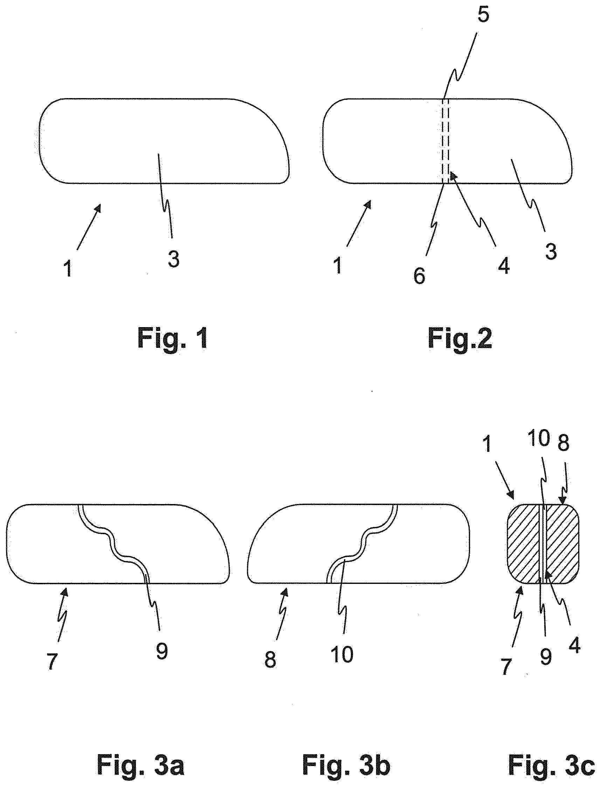

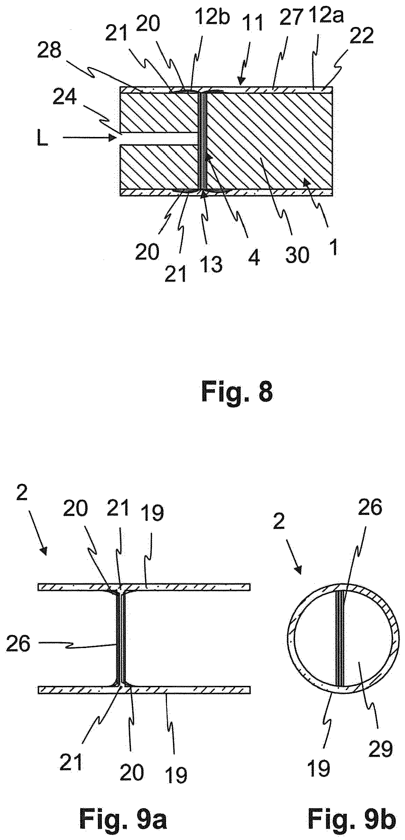

Figur 1 zeigt eine Vorderansicht eines Formkerns 1. Der Formkern 1 ist zur Herstellung eines nicht dargestellten Strukturhohlbauteils 2 (vgl. Fig. 9a, 9b) vorgesehen. Der Formkern 1 ist vorzugsweise aus Granulatkörnern, insbesondere Sand, ausgebildet, die über ein Bindemittel, insbesondere einem Kleber, zusammengehalten werden. Zudem expandiert der Formkern 1 vorzugsweise infolge einer Temperaturerhöhung, so dass sich sein Volumen 3 vergrößert.

Bei der nachfolgenden Beschreibung der in den Figuren 2 bis 3c dargestellten alternativen Ausführungsbeispiele des Formkerns 1 werden für Merkmale, die im Vergleich zum in Figur 1 dargestellten ersten Ausführungsbeispiel in ihrer Ausgestaltung und/oder Wirkweise identisch und/oder zumindest vergleichbar sind, gleiche Bezugszeichen verwendet. Sofern diese nicht nochmals detailliert erläutert werden, entspricht deren Ausgestaltung und/oder Wirkweise der Ausgestaltung und Wirkweise der vorstehend bereits beschriebenen Merkmale.

So zeigt Figur 2 ein zweites Ausführungsbeispiel des Formkerns 1, der vorliegend vorzugsweise einteilig ausgebildet ist. Der Formkern 1 weist einen Kanal 4 mit einer ersten Kanalöffnung 5 und einer zweiten Kanalöffnung 6 auf. Der Kanal 4 ist mit dem Formkern 1 in einem Rapid-Prototyping-Verfahren, insbesondere einem 3D-Druckverfahren, urgeformt. Des Weiteren erstreckt er sich durch den gesamten Formkern 1 hindurch bzw. abbildungsgemäß über seine gesamte Höhe hinweg. Vorliegend ist der Kanal 4 geradlinig ausgebildet. In einem vorliegend nicht dargestellten Ausführungsbeispiel kann der Kanal 4 zusätzlich oder alternativ geknickt und/oder, wie in Figur 3a und 3b dargestellt, gebogen sein. Zusätzlich oder alternativ ist es vorteilhaft, wenn der Kanal 4 mit zumindest zwei voneinander in seiner Längserstreckung bzw. Längsrichtung beabstandete Hinterschneidungen ausgebildet ist (vgl. Figur 3a und 3b). Der Kanal 4 kann auch eine Freiformgeometrie aufweisen. Er kann auch aus mehreren gleichen und/oder zueinander unterschiedlichen vorstehenden Abschnitten zusammengesetzt sein.

Die Figuren 3a und 3b zeigen jeweils eine Hälfte eines mehrteiligen Formkerns 1 mit einem urgeformten, in einem Rapid-Prototyping-Verfahren hergestellten Kanal 4. In Figur 3c ist dieser Formkern zusammengesetzt in einer Querschnittsansicht dargestellt. Der Formkern 1 weist einen ersten Formkernteil 7 sowie einen zweiten Formkernteil 8 auf. Zur Ausbildung des Kanals 4 wird in den ersten Formkernteil 7 eine erste Längsschnitthälfte 9 und in den zweiten Formkernteil 8 eine zweite Längsschnitthälfte 10 urgeformt. Die beiden Längsschnitthälften 9, 10 korrespondieren miteinander, so dass sie zusammengesetzt den Kanal 4 ausbilden. Hierfür werden die beiden Formkernteile 7, 8 entsprechend miteinander verbunden, insbesondere verklebt. Alternativ kann der Formkern 1 auch einteilig ausgebildet sein.

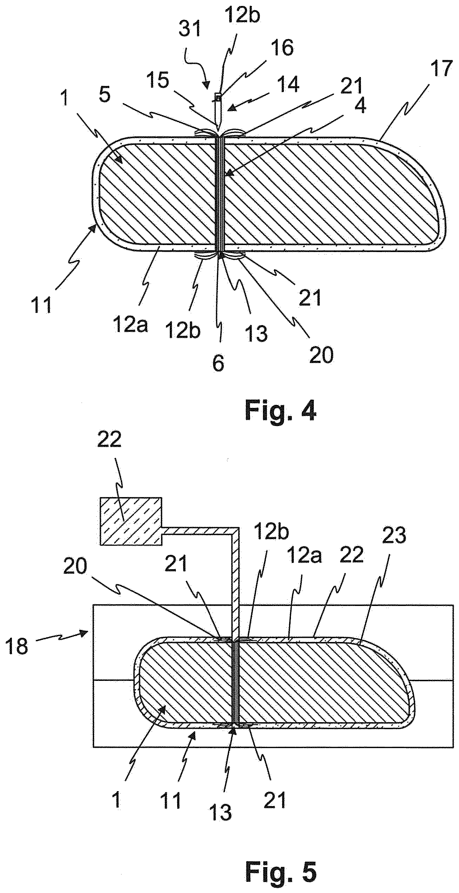

In Figur 4 ist ein Formkern 1 dargestellt, welcher mit einer ersten Fasereinheit 11 umwickelt ist. Die erste Fasereinheit 11 ist von einer Vielzahl an Fasern 12a ausgebildet und kann mehrere übereinanderliegende Faserschichten umfassen. Dabei ist es unerheblich, ob die Fasern 12a Stapelfasern, Endlosfasern oder dergleichen sind. Ebenso ist es denkbar, dass die erste Fasereinheit 11 durch zumindest eine Fasermatte ausgebildet ist. Zudem weist der Formkern 1 eine zweite Fasereinheit 13 auf. Die zweite Fasereinheit ist durch Fasern 12b ausgebildet.

Die Fasern 12b werden mittels einer, mechanischen und/oder pneumatischen Einbringvorrichtung 31, insbesondere mittels einer vorliegend nicht dargestellten Düse oder einer Nadel 14, durch den Kanal 4 und/oder die erste Fasereinheit 11 geführt. Die wenigstens eine Faser 12b wird mit der Einbringvorrichtung 31 durch den Formkern 1, insbesondere dessen Kanal 4, geführt und verbleibt zumindest teilweise in diesem. Durch die Einbringung mehrerer Fasern 12b wird die zweite Fasereinheit 13 ausgebildet. Die zweite Fasereinheit 13 wird durch die erste Fasereinheit 11 sowie den Formkern 1 geführt, insbesondere gestochen. Die beiden Kanalöffnungen 5, 6 sind an einer Außenseite 17 der ersten Fasereinheit 11 ausgebildet.

Der Kanal 4 ist vor dem Umwickeln des Formkerns 1 gemeinsam mit diesem durch ein Urformverfahren, nämlich ein Rapid-Prototyping-Verfahren, ausgebildet.

Um die zweite Fasereinheit 13 durch die erste Fasereinheit 11 durchzuführen bzw. durchzustecken, kann in die erste Fasereinheit 11 ein nicht dargestellter Schlitz und/oder eine Öffnung eingebracht, insbesondere geschnitten, sein. Die überstehenden Enden 20 der Fasern 12b der zweiten Fasereinheit 13 werden auf die Außenseite 17 der ersten Fasereinheit 11 geklappt, so dass sie unter Ausbildung jeweils eines Verbindungsbereiches 21 mit dieser verbunden werden können.

Zusätzlich kann die Faserschicht der ersten Fasereinheit 11 auf ihrer Außenseite mit einer vorliegend nicht dargestellten zweiten Schicht umwickelt werden, so dass die Enden 20 zwischen diesen beiden Faserschichten eingebettet sind.

Der Kanal 4 ist vor dem Einbringen der Fasern 12b zusammen mit dem Formkern 1 urgeformt. Die Fasern 12b der zweiten Fasereinheit 13 können sodann mittels der Einbringvorrichtung 31, insbesondere mittels der Nadel 14 oder eines Luftstroms, in den Kanal 4 gebracht, insbesondere durchgezogen oder eingeblasen werden. Die Nadel weist gemäß Figur 4 an ihrem einen Ende eine Spitze 15 zum leichten Einführen und an ihrem anderen Ende ein Nadelöhr 16 zur Aufnahme zumindest eines Teils der zweiten Fasereinheit 13 auf.

Die Figur 5 zeigt ein Formwerkzeug 18, in welchem der Formkern 1 zusammen mit den beiden Fasereinheiten 11, 13 angeordnet ist. Im dargestellten Ausführungsbeispiel wurden die Fasern 12a der ersten Fasereinheit 11 vor dem Einbringen des Formkerns 1 in das Formwerkzeug 18 im Wechsel mit den Fasern 12b der zweiten Fasereinheit 13 um den Formkern 1 gewickelt bzw. in dessen Kanal 4 eingebracht. Hierdurch werden die Verbindungsbereiche 21 im Inneren der ersten Fasereinheit 11 ausgebildet.

Zur Fixierung der Fasern 12a, 12b beider Fasereinheiten 11, 13 wird Matrixmaterial 22 in das Formwerkzeug 18 injiziert. Das Matrixmaterial 22 wird durch die erste Fasereinheit 11 hindurch in den die zweite Fasereinheit 13 aufweisenden Kanal 4 gepresst. Die beiden Fasereinheiten 11, 13 werden hierdurch in das Matrixmaterial 22 eingebettet. Nach dem Injizieren des Matrixmaterials 22 wird dieses infolge einer Druck- und/oder Temperaturänderung ausgehärtet. Dabei expandiert der Formkern 1 derart, dass zumindest die erste Fasereinheit 11 mit dem Matrixmaterial 22 gegen eine Negativform 23 des Formwerkzeugs 18 gepresst wird. Hierdurch behalten die beiden mit dem Matrixmaterial 22 getränkten Fasereinheiten 11, 13 auch nach dem Aushärten des Matrixmaterials 22 ihre vorgegebene Form.

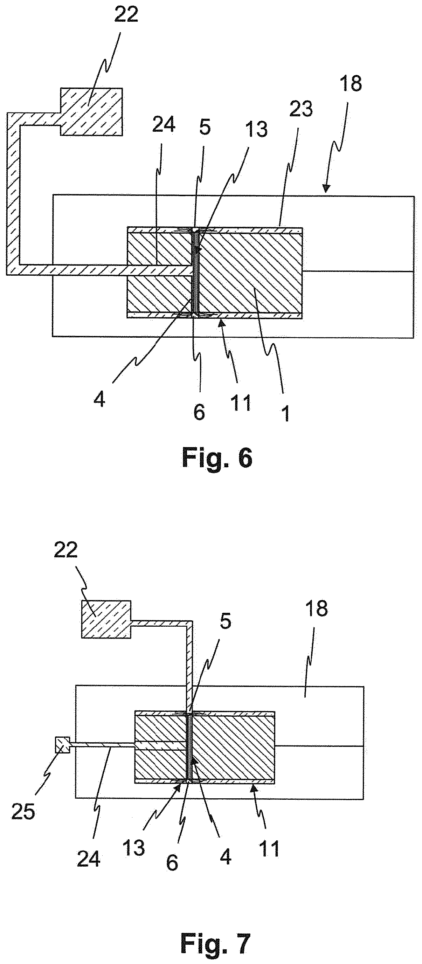

Bei der nachfolgenden Beschreibung der in den Figur 6 und 7 dargestellten alternativen Ausführungsbeispiele des Formwerkzeugs 18 werden für Merkmale, die im Vergleich zum in Figur 5 dargestellten ersten Ausführungsbeispiel des Formwerkzeugs 18 in ihrer Ausgestaltung und/oder Wirkweise identisch und/oder zumindest vergleichbar sind, gleiche Bezugszeichen verwendet. Sofern diese nicht nochmals detailliert erläutert werden, entspricht deren Ausgestaltung und/oder Wirkweise der Ausgestaltung und Wirkweise der vorstehend bereits beschriebenen Merkmale.

In Figur 6 ist das Formwerkzeug 18 mit einem Zuführkanal 24 dargestellt. Der Zuführkanal 24 kann zusammen mit dem zumindest einen Kanal 4 und dem Formkern 1, insbesondere in einem Rapid-Prototyping-Verfahren, urgeformt sein. Der Zuführkanal 24 ist mit dem Kanal 4 im Bereich zwischen den beiden Kanalöffnungen 5, 6 mit diesem verbunden. Über den Zuführkanal 24 wird das Matrixmaterial 22 in den Kanal injiziert, vorzugsweise derart, dass auch die erste Fasereinheit 11 mit dem Matrixmaterial 22 getränkt wird. Nach dem Aushärten des Matrixmaterials 22 ist es möglich, den Formkern 1 über den Zuführkanal 24 auszuspülen. Die Kombination der in den Figuren 5 und 6 beschriebenen Ausbildung des Formwerkzeugs ist denkbar.

Die Figur 7 zeigt das Formwerkzeug 18 mit dem Zuführkanal 24. Im Gegensatz zur Fig. 6 wird hier in den Zuführkanal 24 ein Füllmaterial 25 gefüllt. Das Füllmaterial 25 ist vorzugsweise ein Expansionsmaterial wie beispielsweise Wachs. Das Matrixmaterial 22 wird über die erste Kanalöffnung 5 durch die erste Fasereinheit 11 hindurch in die zweite Fasereinheit 13 gepresst. Hierdurch werden beide Fasereinheiten 11, 13 in das Matrixmaterial 22 gebettet. Weiterhin ist es möglich, den Kanal 4 mit dem Matrixmaterial 22 zu füllen, ohne zuvor die zweite Fasereinheit 13 darin anzuordnen. Durch das Füllmaterial 25 wird sichergestellt, dass das Matrixmaterial 22 lediglich in den Kanal 4 dringt, nicht aber in den Zuführkanal 24 selbst. Nach dem Aushärten des Matrixmaterials 22 wird das Füllmaterial 25 aus dem Zuführkanal 24 ausgespült. Hierdurch behält der Zuführkanal 24 seine vorteilhafte Wirkung bei, dass der Formkern 1 durch diesen schnell ausgespült werden kann.

Die Figur 8 zeigt die beiden in das Matrixmaterial 22 eingebetteten Fasereinheiten 11,13 nach dem Aushärten des Matrixmaterials 22. Der Formkern 1 ist dabei noch von der Fasereinheit 11 sowie dem Matrixmaterial 22 umschlossen angeordnet. Die Verbindungsbereiche 21 sind dabei an einer Innenseite 27 der ersten Fasereinheit 11 ausgebildet. Die zweite Fasereinheit 13 wird in die Kanal 4 eingebracht, bevor die erste Fasereinheit 11 um den Formkern 1 gewickelt bzw. gelegt wird. Die überstehenden Enden 20 der Fasern 12b der zweiten Fasereinheit 13 werden auf einen Umfang 28 des Formkerns 1 geklappt.

Um den Formkern 1 zur Ausbildung des Strukturhohlbauteils 2 zu entfernen, wird ein Lösungsmittel L in den Zuführkanal 24 gespült. Der lösliche Formkern 1, insbesondere dessen lösliches Bindemittel, löst sich hierdurch aus dem Strukturbauteil 2. Die in das Matrixmaterial 22 eingebettete erste Fasereinheit 11 bildet folglich eine Bauteilwandung 19 des Strukturhohlbauteils 2 aus. Die in das Matrixmaterial 22 eingebettete zweite Fasereinheit 13 bildet ein Verstärkungselement, insbesondere eine Verstärkungsstrebe 26, (vgl. Figuren 9a, 9b) aus. Das Lösungsmittel L kann ebenso auf einen Querschnitt 30 des Formkerns 1 gespült werden.

Die Figuren 9a und 9b zeigen das nach dem beschriebenen Herstellungsverfahren ausgebildete Strukturhohlbauteil 2 aus unterschiedlichen Ansichten. Das Strukturhohlbauteil 2 weist die Bauteilwandung 19 auf. Die Bauteilwandung 19 begrenzt einen Bauteilhohlraum 29. Durch den Bauteilhohlraum 29 erstreckt sich das Verstärkungselement, insbesondere die Verstärkungsstrebe 26. Das Verstärkungselement, insbesondere die Verstärkungsstrebe 26, ist an seinen beiden Enden 20 durch den jeweils zugeordneten Verbindungsbereich 21 mit der Bauteilwandung 19 verbunden.

### Bezugszeichenliste

- 1: Formkern
- 2: Strukturhohlbauteil
- 3: Volumen
- 4: Kanal
- 5: Erste Kanalöffnung
- 6: Zweite Kanalöffnung
- 7: Erster Formkernteil
- 8: Zweiter Formkernteil
- 9: Erste Längsschnitthälfte
- 10: Zweite Längsschnitthälfte
- 11: Erste Fasereinheit
- 12a: Faser der ersten Fasereinheit
- 12b: Faser der zweiten Fasereinheit
- 13: Zweite Fasereinheit
- 14: Nadel
- 15: Spitze
- 16: Nadelöhr
- 17: Außenseite
- 18: Formwerkzeug
- 19: Bauteilwandung
- 20: Enden
- 21: Verbindungsbereich
- 22: Matrixmaterial
- 23: Negativform
- 24: Zuführkanal
- 25: Füllmaterial
- 26: Verstärkungsstrebe
- 27: Innenseite
- 28: Umfang
- 29: Bauteilhohlraum
- 30: Querschnitt
- 31: Einbringvorrichtung

- L: Lösungsmittel

## Patentansprüche

1. Verfahren zur Herstellung eines faserverstärkten Strukturhohlbauteils (2),
bei welchem ein Formkern (1) hergestellt wird,
der Formkern (1) sowie Fasern (12a, 12b) mit einem Matrixmaterial (22) in ein Formwerkzeug (18) eingebracht werden,
so dass sich eine erste Fasereinheit (11) mit dem Matrixmaterial (22) zur zumindest teilweisen Ausbildung einer Bauteilwandung (19) zwischen dem Formkern (1) und dem Formwerkzeug (18) befindet, das Matrixmaterial (22) zur Ausbildung des Strukturhohlbauteils (2) infolge einer Temperatur- und/oder Druckänderung ausgehärtet wird und der Formkern (1) nach dem Aushärten zur Ausbildung eines Bauteilhohlraums (29) aus dem Strukturhohlbauteil (2) ausgespült wird, dass in dem Formkern (1) wenigstens ein sich durch diesen erstreckender Kanal (4) ausgebildet wird, der während der Formkernherstellung zusammen mit dem Formkern (1) urgeformt wird,
dass in den Kanal (4) eine zweite Fasereinheit (13) und/oder Matrixmaterial (22) eingebracht werden und
dass die zweite Fasereinheit (13) unter Ausbildung zweier Verbindungsbereiche (21) an ihren beiden Enden (20) mit dem jeweils zugeordneten Bereich der ersten Fasereinheit (11) verbunden wird,
so dass nach dem Aushärten des Matrixmaterials (22) und dem Ausspülen des Formkerns (1) ein sich durch den Bauteilhohlraum (29) erstreckendes und im Bereich seiner beiden Enden (20) form- und/oder stoffschlüssig mit der Bauteilwandung (19) verbundenes Verstärkungselement (26) ausgebildet wird,
**dadurch gekennzeichnet,**
**dass** der Formkern (1) zusammen mit seinem zumindest einen Kanal (4) in einem Rapid-Prototyping-Verfahren urgeformt wird,
**dass** die Fasern (12b) der zweiten Fasereinheit (13) mittels einer pneumatischen und/oder mechanischen Einbringvorrichtung (31) in den Kanal (4) eingebracht werden und
**dass** wenigstens einer der beiden Verbindungsbereiche (21) an einer Außenseite (17) der ersten Fasereinheit (11) ausgebildet wird.

2. Verfahren nach dem vorherigen Anspruch, **dadurch gekennzeichnet, dass** der Formkern (1) zusammen mit seinem zumindest einen Kanal (4) und einem Zuführkanal (24) zum Zuführen eines Lösungsmittels (L) in einem Rapid-Prototyping-Verfahren, insbesondere einem 3D-Druckverfahren, urgeformt wird.

3. Verfahren nach einem oder mehreren der vorherigen Ansprüche,
**dadurch gekennzeichnet, dass** die erste Fasereinheit (11) um den Formkern (1) gewickelt wird,
dass der umwickelte Formkern (1) in das Formwerkzeug (18) eingebracht wird und/oder
dass das Matrixmaterial (22) nach dem Schließen des Formwerkzeugs (18) in dieses injiziert wird.

4. Verfahren nach einem oder mehreren der vorherigen Ansprüche,
**dadurch gekennzeichnet, dass** das Matrixmaterial (22) von der dem Formwerkzeug (18) zugewandten Seite des Formkerns (1), insbesondere über zumindest eine Kanalöffnung (5, 6) und/oder durch die erste Fasereinheit (11) hindurch, und/oder
durch den mit dem Kanal (4) im Bereich zwischen seinen beiden Kanalöffnungen (5, 6) verbundenen Zuführkanal (24) in den Kanal (4) injiziert wird.

5. Verfahren nach einem oder mehreren der vorherigen Ansprüche,
**dadurch gekennzeichnet, dass** ein gerader, geknickter und/oder gebogener Kanal (4) ausgebildet wird und/oder
der Kanal (4) mit zumindest zwei voneinander in seiner Längsrichtung beabstandeten Hinterschneidungen ausgebildet wird.

6. Verfahren nach einem oder mehreren der vorherigen Ansprüche, **dadurch gekennzeichnet, dass** die Fasern (12b) der zweiten Fasereinheit (13) mittels einer Nadel (14) und/oder eines Luftstroms in den Kanal (4) eingebracht werden.

7. Verfahren nach einem oder mehreren der vorherigen Ansprüche, **dadurch gekennzeichnet, dass** die zweite Fasereinheit (13) unter Ausbildung der zwei Verbindungsbereiche (21) an ihren beiden Enden (20) mit dem jeweils zugeordneten Bereich der ersten Fasereinheit (11) stoff- und/oder formschlüssig verbunden wird.

8. Verfahren nach einem oder mehreren der vorherigen Ansprüche,
**dadurch gekennzeichnet, dass** in die erste Fasereinheit (11) ein Schlitz geschnitten wird und die zweite Fasereinheit (13) durch diesen Schlitz geführt wird oder
dass die zweite Fasereinheit (13) mit der Nadel (14) durch die um den Formkern (1) liegende erste Fasereinheit (11) gestochen wird und/oder
dass das überstehende Ende (20) der zweiten Fasereinheit (13) auf die Außenseite (17) der ersten Fasereinheit (11) geklappt und/oder mit dieser vernäht wird.

9. Verfahren nach einem oder mehreren der vorherigen Ansprüche, **dadurch gekennzeichnet, dass** wenigstens einer der beiden Verbindungsbereiche (21) an einer Innenseite (27) der ersten Fasereinheit (11) ausgebildet wird, wobei vorzugsweise zuerst die zweite Fasereinheit (13) in den Kanal (4) eingebracht wird, das überstehende Ende (20) der zweiten Fasereinheit (13) auf einen Umfang (28) des Formkerns (1) geklappt wird und/oder anschließend der Formkern (1) mit der ersten Fasereinheit (11) umwickelt wird.

10. Verfahren nach einem oder mehreren der vorherigen Ansprüche, **dadurch gekennzeichnet, dass** wenigstens einer der beiden Verbindungsbereiche (21) im Inneren der ersten Fasereinheit (11) ausgebildet wird.

11. Verfahren nach einem oder mehreren der vorherigen Ansprüche,
**dadurch gekennzeichnet, dass** der Zuführkanal (24) des Formkerns (1) vor dem Injizieren des Matrixmaterials (22) mit einem Füllmaterial (25), insbesondere mit einem Expansionsmaterial wie beispielsweise Wachs, gefüllt wird und das Füllmaterial (25) nach dem Aushärten des Matrixmaterials (22) zusammen mit dem Formkern (1) ausgespült wird und/oder
dass der Formkern (1) bei Temperaturerhöhung expandiert, so dass die erste Fasereinheit (11) sowie auch das Matrixmaterial (22) nach außen gegen eine Negativform (23) des Formwerkzeugs (18) gepresst werden.

12. Verfahren nach einem oder mehreren der vorherigen Ansprüche, **dadurch gekennzeichnet, dass** nach dem Aushärten des Matrixmaterials (22) das Lösungsmittel (L) in den Zuführkanal (24) des Formkerns (1) und/oder auf einen Querschnitt (30) des Formkerns (1) gespült wird, so dass sich der Formkern (1) aus dem Strukturhohlbauteil (2) löst.

## Claims

1. A method for manufacturing a fiber-reinforced hollow structural component (2),
in which a mold core (1) is manufactured,
the mold core (1) and fibers (12a, 12b) with a matrix material (22) are introduced into a molding tool (18),
so that a first fiber unit (11) with the matrix material (22) is located between the mold core (1) and the molding tool (18) in order to at least partially form a component wall (19),
the matrix material (22) is cured as a result of a change in temperature and/or pressure in order to form the hollow structural component (2) and, after the curing, the mold core (1) is flushed out of the hollow structural component (2) in order to form a component cavity (29),
at least one channel (4) extending through the mold core (1) is formed in the mold core (1), which channel (4) is primarily formed with the mold core (1) during the manufacture of the mold core (1),
a second fiber unit (13) and/or matrix material (22) are/is introduced into the channel (4), and
so that the second fiber unit (13) is connected, at its two ends (20), to the particular assigned areas of the first fiber unit (11), while forming two connection areas (21)
so that, after the matrix material (22) has cured and the mold core (1) has been flushed out, a reinforcing element (26) is formed, which extends through the component cavity (29) and is connected, in the area of its two ends (20), to the component wall (19) in a form-locking and/or integrally joined manner
**characterized in that**
the mold core (1) is primarily formed together with its at least one channel (4) in a rapid prototyping method
the fibers (12b) of the second fiber unit (13) are introduced into the channel (4) with the aid of an, in particular, pneumatic and/or mechanical introduction device (31), and
the at least one of the two connection areas (21) is formed on an outer side (17) of the first fiber unit (11).

2. The method as claimed in the preceding claim, **characterized in that** the mold core (1) is primarily formed together with its at least one channel (4) and a supply channel (24) for supplying a solvent (L) in a rapid prototyping method, in particular a 3D printing method.

3. The method as claimed in one or multiple of the preceding claims,
**characterized in that** the first fiber unit (11) is wrapped around the mold core (1),
that the wrapped mold core (1) is introduced into the molding tool (18), and/or
that the matrix material (22) is injected into the molding tool (18) after the molding tool (18) has been closed.

4. The method as claimed in one or multiple of the preceding claims,
**characterized in that** the matrix material (22) is injected from the side of the mold core (1) facing the molding tool (18), in particular via at least one channel opening (5, 6) and/or through the first fiber unit (11), and/or
into the channel (4) through the supply channel (24) connected to the channel (4) in the area between its two channel openings (5, 6).

5. The method as claimed in one or multiple of the preceding claims,
**characterized in that** a straight, sharply bent, and/or curved channel (4) is formed, and/or
the channel (4) is designed to include at least two undercuts which are spaced apart in the longitudinal direction of the channel (4).

6. The method as claimed in one or multiple of the preceding claims, **characterized in that** the fibers (12b) of the second fiber unit (13) are introduced into the channel (4) with the aid of a needle (14) and/or an air flow.

7. The method as claimed in one or multiple of the preceding claims, **characterized in that** the second fiber unit (13) is connected, at its two ends (20), to the particular assigned area of the first fiber unit (11), in an integrally joined and/or form-locking manner, while forming two connection areas (21).

8. The method as claimed in one or multiple of the preceding claims,
**characterized in that** a slot is cut into the first fiber unit (11) and the second fiber unit (13) is guided through this slot or
the second fiber unit (13) is pierced with the needle (14) through the first fiber unit (11) lying around the mold core (1) and/or
the overhanging end (20) of the second fiber unit (13) is folded onto the outer side (17) of the first fiber unit (11) and/or is sewn together therewith.

9. The method as claimed in one or multiple of the preceding claims, **characterized in that** at least one of the two connection areas (21) is formed on an inner side (27) of the first fiber unit (11), wherein the second fiber unit (13) is introduced into the channel (4) first, the overhanging end (20) of the second fiber unit (13) is folded onto a circumference (28) of the mold core (1), and/or, subsequently, the mold core (1) is wrapped with the first fiber unit (11).

10. The method as claimed in one or multiple of the preceding claims, **characterized in that** at least one of the two connection areas (21) is formed in the interior of the first fiber unit (11).

11. The method as claimed in one or multiple of the preceding claims,
**characterized in that** the supply channel (24) of the mold core (1) is filled, before the injection of the matrix material (22), with a filling material (25), in particular with an expansion material such as wax, and, after the matrix material (22) has cured, the filling material (25) is flushed out together with the mold core (1), and/or
that the mold core (1) expands when the temperature increases, so that the first fiber unit (11) as well as the matrix material (22) are pressed outward against a negative mold (23) of the molding tool (18).

12. The method as claimed in one or multiple of the preceding claims,
**characterized in that**, after the matrix material (22) has cured, the solvent (L) is flushed into the supply channel (24) of the mold core (1), and/or
onto a cross-section (30) of the mold core (1), so that the mold core (1) detaches from the hollow structural component (2).

## Revendications

1. Procédé pour la fabrication d'un élément structurel creux (2) renforcé par des fibres,
dans lequel un noyau de moule (1) est fabriqué,
le noyau de moule (1) ainsi que des fibres (12a, 12b) avec un matériau de matrice (22) sont introduits dans un outil de formage (18),
de sorte qu'une première unité de fibres (11) avec le matériau de matrice (22) pour former au moins partiellement une paroi d'élément (19) se trouve entre le noyau de moule (1) et l'outil de formage (18),
le matériau de matrice (22) est durci à la suite d'un changement de température et/ou de pression en vue de la formation de l'élément structurel creux (2)
et le noyau de moule (1) est évacué par rinçage de l'élément structurel creux (2) après le durcissement en vue de la formation d'une cavité d'élément(29),
qu'il est formé dans le noyau de moule (1) au moins un canal (4) s'étendant à travers celui-ci, qui est formé primitivement avec le noyau de moule (1) pendant la fabrication du noyau de moule,
qu'une deuxième unité de fibres (13) et/ou un matériau de matrice (22) sont/est introduit(e)(s) dans le canal (4) et
que la deuxième unité de fibres (13) est reliée à la zone respectivement associée de la première unité de fibres (11) en formant deux zones de raccordement (21) à ses deux extrémités (20),
de sorte qu'après le durcissement du matériau de matrice (22) et le rinçage du noyau de moule (1), il est formé un élément de renforcement (26) s'étendant à travers la cavité d'élément (29) et relié à la paroi d'élément (19) par complémentarité de forme et/ou conjugaison de matières dans la zone de ses deux extrémités (20),
**caractérisé en ce que**
le noyau de moule (1) est formé primitivement conjointement avec son, au moins un, canal (4) dans un procédé de prototypage rapide,
les fibres (12b) de la deuxième unité de fibres (13) sont introduites dans le canal (4) au moyen d'un dispositif d'introduction (31) pneumatique et/ou mécanique, et
au moins l'une des deux zones de raccordement (21) est formée sur un côté extérieur (17) de la première unité de fibres (11).

2. Procédé selon la revendication précédente, **caractérisé en ce que** le noyau de moule (1) est formé primitivement conjointement avec son, au moins un, canal (4) et un canal d'alimentation (24) pour l'introduction d'un solvant (L) dans un procédé de prototypage rapide, en particulier un procédé d'impression 3D.

3. Procédé selon l'une quelconque ou plusieurs des revendications précédentes, **caractérisé en ce que** la première unité de fibres (11) est enroulée autour du noyau de moule (1),
**en ce que** le noyau de moule (1) bobiné est introduit dans l'outil de formage (18) et/ou
**en ce que** le matériau de matrice (22) est injecté dans l'outil de formage (18) après la fermeture de celui-ci.

4. Procédé selon l'une quelconque ou plusieurs des revendications précédentes, **caractérisé en ce que** le matériau de matrice (22) est injecté depuis le côté du noyau de moule (1) tourné vers l'outil de formage (18), en particulier via au moins une ouverture de canal (5, 6) et/ou à travers la première unité de fibres (11), et/ou
est injecté dans le canal (4) à travers le canal d'alimentation (24) relié au canal (4) dans la zone située entre ses deux ouvertures de canal (5, 6).

5. Procédé selon l'une quelconque ou plusieurs des revendications précédentes, caractérisé en ce qu'un canal (4) droit, coudé et/ou courbé est formé, et/ou
le canal (4) est formé avec au moins deux contre-dépouilles espacées l'une de l'autre dans sa direction longitudinale.

6. Procédé selon l'une quelconque ou plusieurs des revendications précédentes, **caractérisé en ce que** les fibres (12b) de la deuxième unité de fibres (13) sont introduites dans le canal (4) au moyen d'une aiguille (14) et/ou d'un courant d'air.

7. Procédé selon l'une quelconque ou plusieurs des revendications précédentes, **caractérisé en ce que** la deuxième unité de fibres (13) est reliée par conjugaison de matières et/ou complémentarité de formes à la zone respectivement associée de la première unité de fibres (11) en formant les deux zones de raccordement (21) à ses deux extrémités (20).

8. Procédé selon l'une quelconque ou plusieurs des revendications précédentes, caractérisé en ce qu'une fente est découpée dans la première unité de fibres (11) et la deuxième unité de fibres (13) est guidée à travers cette fente ou
en ce que la deuxième unité de fibres (13) est piquée à l'aide de l'aiguille (14) à travers la première unité de fibres (11) posée autour du noyau de moule (1) et/ou
en ce que l'extrémité en saillie (20) de la deuxième unité de fibres (13) est rabattue sur le côté extérieur (17) de la première unité de fibres (11) et/ou cousue avec celle-ci.

9. Procédé selon l'une quelconque ou plusieurs des revendications précédentes, caractérisé en ce qu'au moins l'une des deux zones de raccordement (21) est formée sur un côté intérieur (27) de la première unité de fibres (11), la deuxième unité de fibres (13) étant de préférence d'abord introduite dans le canal (4), l'extrémité en saillie (20) de la deuxième unité de fibres (13) étant rabattue sur une circonférence (28) du noyau de moule (1) et/ou, ensuite, le noyau de moule (1) étant enroulé avec la première unité de fibres (11).

10. Procédé selon l'une quelconque ou plusieurs des revendications précédentes, **caractérisée en ce que** l'une au moins des deux zones de raccordement (21) est formée à l'intérieur de la première unité de fibres (11).

11. Procédé selon l'une quelconque ou plusieurs des revendications précédentes, **caractérisé en ce que** le canal d'alimentation (24) du noyau de moule (1) est rempli d'un matériau de remplissage (25), en particulier d'un matériau d'expansion tel que la cire, avant l'injection du matériau de matrice (22), et le matériau de remplissage (25) est évacué par rinçage conjointement avec le noyau de moule (1) après le durcissement du matériau de matrice (22), et/ou
**en ce que** le noyau de moule (1) se dilate en cas d'augmentation de la température, de sorte que la première unité de fibres (11) ainsi que le matériau de matrice (22) sont pressés vers l'extérieur contre un moule négatif (23) de l'outil de formage (18).

12. Procédé selon l'une quelconque ou plusieurs des revendications précédentes, caractérisé en ce qu'après le durcissement du matériau de matrice (22), le solvant (L) est injecté dans le canal d'alimentation (24) du noyau de moule (1) et/ou sur une section transversale (30) du noyau de moule (1), de sorte que le noyau de moule (1) se détache de l'élément structurel creux (2).
